# EUROPÄISCHE PATENTSCHRIFT

(11) **EP 0 649 944 B1**
(45) Veröffentlichungstag und Bekanntmachung des Hinweises auf die Patenterteilung: **29.05.1996**
(21) Anmeldenummer: 94116713.2
(22) Anmeldetag: 22.10.1994
(51) Int. Cl.: E01H 11/00, A01M 21/00

(54) **Vorrichtung zur Beseitigung unerwünschten Pflanzenwuchses auf befestigten Flächen**
Device for eliminating unwanted vegetation on fixed surfaces
Appareil d'élimination de végétation indésirée sur des surfaces fixes

(30) Priorität: 23.10.1993 DE 4336195
(43) Veröffentlichungstag der Anmeldung: 26.04.1995
(73) Patentinhaber: BTC Biotechnik International GmbH, D-25554 Wilster (DE)
(72) Erfinder: Hopp, Hans, Dr., D-25524 Itzehoe (DE); Lucht, Uwe, D-25554 Wilster (DE); Pagel, Jutta, D-25524 Itzehoe (DE)
(74) Vertreter: Braun, Dieter, Dipl.-Ing. Patentanwälte, Hagemann & Kehl

(56) Entgegenhaltungen:
- EP-A- 0 340 845
- WO-A-93/09660
- DE-A- 3 639 705
- DE-U- 9 400 572
- FR-A- 2 312 953

## Beschreibung

Die Erfindung betrifft eine Vorrichtung zur Beseitigung unerwünschten Pflanzenwuchses auf befestigten Flächen mittels Druckluft und eines Strahlmittels, wobei ein an einen Drucklufterzeuger und an einen Behälter für das Strahlmittel angeschlossenes Strahlrohr vorgesehen ist, an dessen Strahldüse eine Abdeckhaube angeordnet ist, die in Strahlrichtung offen ist und daß die Abdeckhaube von einem vorspringenden Abdeckrand umgeben ist, der beim Betrieb der Vorrichtung auf dem zu strahlenden Untergrund aufliegt.

Die Bekämpfung unerwünschten Pflanzenwuchses ist insbesondere auch dann schwierig, sofern es sich um die Beseitigung von Unkraut handelt, das sich in den Fugen zwischen Steinplatten, Pflastersteinen o. ä., festgesetzt hat. Ein mechanisches Entfernen durch Auskratzen der Fugen ist äußerst arbeitsaufwendig. Zudem werden in der Regel nur die oberhalb des Vegetationspunktes liegenden Pflanzenteile erfaßt, so daß die Unkräuter nach kurzer Zeit nachwachsen. Zwar ist die Bekämpfung der Unkräuter mit Herbiziden effektiv, das wachsende Umweltbewußtsein und verschärfte Bestimmungen lassen jedoch den Einsatz von Herbiziden äußerst fragwürdig erscheinen.

In jüngerer Zeit wurde aus diesem Grunde vermehrt das Abbrennen des in den Fugen zwischen Steinplatten o. ä. angesiedelten Unkrautes mittels eines Flammrohres oder durch Infrarot-Strahlung praktiziert. Auch dieses Verfahren weist jedoch u. a. den Nachteil auf, daß das Unkraut im wesentlichen lediglich in seinem oberen, oberhalb des Vegetationspunktes liegenden Bereich abgebrannt wird. Auch hier kommt es nach kurzer Zeit zu einem neuen Wachstum. Bei diesem Verfahren ist es zudem von großem Nachteil, daß die Unkrautvernichtung mit einem hohen Energieverbrauch einhergeht.

Es ist weiterhin bereits bekannt, das Unkraut von befestigten Flächen mittels rotierender Stahlbürsten zu entfernen. Da jedoch nur die obersten Pflanzenteile entfernt werden, kommt es auch hier schon nach kurzer Zeit zu einem Wiederaustrieb aus dem Vegetationspunkt.

Grundsätzlich ist es durch die DE-OS 25 25 479 auch bereits bekannt geworden, zum Abschneiden und zum Zerfasern von Pflanzen und Pflanzenteilen ein Strahlmedium, nämlich eine Flüssigkeit oder feste Partikel, vorzugsweise Sand, einzusetzen. Der Strahl wird mittels einer Druckpumpe erzeugt und ist auf eine in Strahlrichtung hinter der Pflanze bzw. dem Pflanzenteil angeordnete Prallwand gerichtet, die die verbliebene Strahlenergie absorbiert. Da sich bei der beschriebenen Lösung die Pflanze stets zwischen der Strahldüse und der dahinter angeordneten Prallwand befinden muß, ist das beschriebene Gerät lediglich als eine Art Mähmaschine einsetzbar. Ein Einsatz, z. B. zum Entfernen von Unkraut aus den Fugen zwischen Steinplatten, ist aus dem genannten Grunde nicht möglich.

Durch die DE 36 39 705 A1 ist es auch bereits bekannt geworden, an einer zur Unkrautvernichtung einsetzbaren Vorrichtung eine Abdeckhaube anzuordnen, die in Strahlrichtung offen ist und beim Betrieb der Vorrichtung auf der mit Wasserdampf zu strahlenden, mit Unkraut bewachsenen Fläche aufliegt. Mittels der Anordnung der Abdeckhaube soll hier jedoch ausschließlich ein vorzeitiges Entweichen von Wasserdampf verhindert werden, der aus den Öffnungen eines im Reflektor angeordneten Sprühkörpers austritt. Die Abdeckhaube stellt hier lediglich sicher, daß eine für die angestrebte Vernichtung von Unkraut erforderliche ausreichende Wärmeeinwirkung erfolgt.

Der Erfindung liegt die Aufgabe zugrunde, eine Vorrichtung zu schaffen, die es insbesondere ermöglicht, die Fugen zwischen Steinplatten, Pflastersteinen o. ä., nachhaltig von Pflanzenbewuchs zu befreien.

Diese Aufgabe wird erfindungsgemäß durch die kennzeichnenden Merkmale des Anspruchs 1 gelöst. Die weitere Ausgestaltung der Erfindung ist den Unteransprüchen zu entnehmen.

Wie sich gezeigt hat, ist eine gute und schnelle Beseitigung unerwünschten Pflanzenwuchses in den Fugen zwischen Steinplatten o. ä. möglich, sofern die Abdeckhaube als Abdeckscheibe ausgebildet ist und einen Prallraum aufweist, in dessen Bereich die Abdeckscheibe aus einem harten elastischen Material besteht, wobei die Tiefe des Prallraumes 10 bis 50 % des Durchmessers des Prallraumes beträgt, daß die Abdeckscheibe verschwenkbar am Strahlrohr angeordnet ist und daß der Abdeckrand aus einem weichen, elastischen verformbaren Material besteht.

Während ein aus der Strahldüse eines Strahlrohres frei austretender Sandstrahl bei der Bearbeitung der Fingen zu einer erheblichen Verschmutzung und Belästigung der Umgebung mit verwirbelten Pflanzenresten, Erd- und Sandteilchen führt, die letztlich die Verwendung eines herkömmlichen Sandstrahlrohres unmöglich macht, ermöglicht die erfindungsgemäße Anordnung einer Abdeckscheibe einen sehr effektiven und umweltschonenden Einsatz eines Strahlrohres. Dieses ergibt sich daraus, daß die Abdeckscheibe als Abkapselung im Wirkungsbereich des aus der Strahldüse des Strahlrohres austretenden Strahls wirkt. Das in die Fingen zwischen den Steinen eintretende Strahlmittel bewirkt dort eine schnelle und effektive Zerstörung oder Abtrennung der Pflanzen bis weit in den Wurzelbereich hinein. Insbesondere wird in der Regel auch der Vegetationspunkt der Pflanzen zerstört, so daß auch die verbleibenden Wurzelreste absterben. Das auf die Oberfläche der Steine auftreffende Strahlmittel wird genau wie ein Teil des aus den Fingen zurückgeschleuderten Materials immer wieder im muldenförmigen Prallraum der Abdeckscheibe abgefangen. Das Strahlmittel und das in der Fuge losgelöste Material prallt dann von der Oberfläche des Prallraumes zurück in den Arbeitsbereich. Im Bereich der Fuge entfalten das Strahlmittel und das losgelöste Material dann die angestrebte Zerkleinerungswirkung auf die Pflanzen.

Insgesamt wirkt sich die Abkapselung des Arbeitsbereiches durch die erfindungsgemäß angeordnete Abdeckscheibe auch hinsichtlich des Verbrauchs an Strahlmittel und Druckluft äußerst positiv aus. Der Energiebedarf konnte erheblich reduziert werden. Zudem wird im Vergleich zu herkömmlichen Sandstrahlverfahren der Verbrauch an Strahlmittel um wenigstens 70 % gesenkt.

Wie sich weiterhin gezeigt hat, lagern sich das zerkleinerte Pflanzenmaterial, Erde, Sand und das Strahlmittel, vorzugsweise im Bereich der Fugen ab. Der vorspringende Abdeckrand der Abdeckscheibe liegt während der Bearbeitung auf der Oberfläche der Steine auf und bewirkt in diesem Bereich einen wirksamen Abschluß. Außerdem bewirkt der Prallraum der Abdeckscheibe eine Vernichtung eines Großteils der kinetischen Energie des Strahlmittels. Die Druckluft kann lediglich über die geöffneten Fugen zwischen den Steinen abströmen. Sie führt dabei selbstverständlich Strahlmittel, Erde und Pflanzenreste mit sich. Die Verteilung im Umfeld erfolgt jedoch in flacher Form und aufgrund des Energieverlustes mit geringer Geschwindigkeit, so daß eine Beschädigung im Umfeld befindlicher Gegenstände, wie z. B. von Autos sowie eine Belästigung der Umgebung, mit Sicherheit ausgeschlossen ist. Im übrigen verbleiben ein Teil des Strahlmittels und der Pflanzenreste in den Fugen. Nach erfolgter Bearbeitung ist eine Reinigung der Steinoberflächen mittels z. B. eines schwachen Luftstrahles leicht möglich.

Da es sich gezeigt hat, daß die Oberfläche der Steinplatten im Bereich der bearbeiteten Fugen, insbesondere durch ein leichtes Aufrauhen der Oberfläche derart aufgehellt wird, daß der Plattenbelag insgesamt unansehnlich wird, hat es sich als vorteilhaft erwiesen, wenn.vor dem Strahlen eine Benetzungsflüssigkeit aufgebracht wird. Überraschenderweise hat es sich gezeigt, daß die Benetzungsflüssigkeit bewirkt, daß die unmittelbare Einwirkung des Strahlmittels auf die Oberfläche der Steinplatten derart abgepuffert wird, daß deren Oberfläche nicht angegriffen, d. h. aufgerauht wird. Andererseits bleibt der angestrebte Effekt der intensiven Einwirkung auf den Pflanzenwuchs voll erhalten, was daraus zu erklären ist, daß die Oberfläche der Pflanzen insgesamt sehr viel weicher ist als die Oberfläche der Steinplatten. Außerdem kann sich auf den weichen und nachgiebigen, flächenmäßig begrenzten Pflanzenteilen kein dämpfender Wasserfilm ausbilden. Hinzu kommt, daß die Pflanzenteile durch den Druckluft-Strahlmittelstrom in intensive Schwingungen versetzt werden, die eine Ausbildung eines Wasserfilms zusätzlich verhindern.

Obgleich die Benetzungsflüssigkeit vor der Bearbeitung auf dem zu behandelnden Untergrund z. B. durchaus durch Aufsprühen mittels eines geeigneten gesonderten Gerätes aufgebracht werden kann, hat es sich als besonders vorteilhaft erwiesen, wenn die Benetzungsflüssigkeit über eine Zuleitung der Strahldüse des Strahlrohrs der erfindungsgemäßen Vorrichtung zugeführt wird. Eine gesonderte Behandlung des Untergrundes ist somit nicht notwendig. Außerdem kann die im Strahlrohr wirksame Druckluft zum wirkungsvollen Aufbringen der Benetzungsflüssigkeit genutzt werden. Vorzugsweise handelt es sich bei der Benetzungsflüssigkeit um Wasser.

In weiterer Ausgestaltung kann der Benetzungsflüssigkeit ein herbizides Mittel zugesetzt werden. Es ergibt sich dann der zusätzliche Effekt, daß neben der an sich bereits sehr intensiven mechanischen Einwirkung eine zusätzliche Wirkung erzielbar ist, die insbesondere in Hinblick auf eine Langzeitwirkung von Bedeutung sein kann. In der Regel ist die beschriebene zusätzliche Maßnahme jedoch nicht erforderlich.

Vorzugsweise ist zwischen dem Behälter für das Strahlmittel und der Strahldüse des Strahlrohres ein einstellbares Belüftungsventil vorgesehen, über das eine Strahlmittel-Leitung belüftbar ist, derart, daß die Menge des an der Strahldüse des Strahlrohres austretenden Strahlmittels veränderbar ist. Wie sich gezeigt hat, ist es in vielen Fällen durchaus möglich, den Anteil des dem Luftstrom zugesetzten Strahlmittels stark zu reduzieren. Die Anordnung des napfförmigen Prallraumes vor der Strahldüse des Strahlrohres bewirkt, daß aus den Fugen herausgeschleuderte Erde oder Sand in die Fugen zurückgeschleudert werden und als Strahlmittel wirkend die dort wachsenden Pflanzen zerstören können. Unter optimalen Bedingungen kann sogar ganz auf die Zufuhr von Strahlmittel verzichtet werden.

Gemäß einer bevorzugten Ausführungsform der Erfindung ist das Strahlrohr tragbar; außerdem ist am Strahlrohr eine Handhabe zur Verstellung des zwischen dem Behälter für das Strahlmittel und der Strahldüse angeordneten Belüftungsventils vorgesehen. Es ist somit dem Bediener möglich, die Einstellung auf sehr einfache Art und Weise an die jeweiligen Erfordernisse anzupassen, wie z. B. an die Breite der Fuge und an die Menge und Höhe des zu beseitigenden Unkrauts.

Desweiteren ist vorzugsweise zwischen dem Behälter für das Strahlmittel und der Strahldüse des Strahlrohres ein Absperrschieber zum Verschließen der Strahlmittel-Leitung vorgesehen. Der Absperrschieber wird vom Bediener zusätzlich betätigt, sofern auf eine Zufuhr von Strahlmittel völlig verzichtet werden kann. Eine Handhabe für den Absperrschieber ist vorzugsweise gleichfalls am Strahlrohr angeordnet.

Vorzugsweise ist am Strahlrohr auch ein Ventil mit einer Handhabe zur Einstellung der an der Strahldüse austretenden Druckluftmenge angeordnet. Es ergibt sich somit zusätzlich die Möglichkeit, die an der Strahldüse austretende Druckluftmenge zu regulieren und an die jeweiligen Erfordernisse optimal anzupassen. Im übrigen ist es vorteilhaft, wenn die Zuleitung der Benetzungsflüssigkeit zum Strahlrohr mittels eines Ventils absperrbar ist, da nicht in jedem Fall ein Aufbringen der Benetzungsflüssigkeit erforderlich ist.

Sofern der Drucklufterzeuger, der Behälter für das Strahlmittel und gegebenenfalls auch der Behälter für die Benetzungsflüssigkeit auf einem fahrbaren Untersatz angeordnet sind, wird der Transport der Vorrichtung auch während der Bearbeitung von unerwünschtem Pflanzenwuchs wesentlich erleichtert.

Weiterhin ist es von Vorteil, wenn die Abdeckscheibe am Strahlrohr verschwenkbar angeordnet ist. Es ist somit möglich, den Winkel, unter dem der aus der Strahldüse austretende Strahl auf den Pflanzenwuchs auftrifft, zu verändern und so die Intensität der Einwirkung an die jeweiligen Erfordernisse anzupassen. Außerdem ist es sichergestellt, daß der Abdeckrand der Abdeckscheibe stets vollständig auf dem zu strahlenden Untergrund aufliegt.

Gemäß einer bevorzugten Ausführungsform der Erfindung mündet die Strahldüse des Strahlrohres mittig in den Prallraum ein. Auf diese Art und Weise wird eine möglichst gleichmäßige Reflexion des Strahlmittels in den Prallraum sichergestellt. Ein Großteil des Strahlmittels wird somit in optimaler Wirkrichtung in die Fuge zurückgeschleudert. Dieses wird insbesondere auch dadurch erreicht, daß die Bodenfläche des Prallraumes der Abdeckscheibe zum Großteil einen parallel zum Untergrund verlaufenden Abschnitt aufweist. An diesen Abschnitt schließt sich ein etwa kegelmantelförmig ausgebildeter Abschnitt als Übergang zum Abdeckrand an. Von diesem kegelmantelförmig ausgebildeten Abschnitt prallt das Strahlmittel in die Mitte des Arbeitsbereiches zurück. Wie sich gezeigt hat, ergibt sich ein besonders guter Wirkungsgrad der Vorrichtung, sofern die Austrittsöffnung der Strahldüse des Strahlrohres einen Abstand von 25 bis 125 mm, vorzugsweise von 45 mm zum Untergrund aufweist.

Vorzugsweise hat die Abdeckscheibe einen Außendurchmesser von etwa 100 - 300 mm. Dabei hat sich ein Außendurchmesser von etwa 260 mm, z. B. für die Bearbeitung der Fugen zwischen dem Befestigungsmaterial, als optimal erwiesen. Selbstverständlich wird angestrebt, jeweils eine möglichst große Fläche zu bearbeiten. Diese Fläche wird von der unter Berücksichtigung eines optimalen Arbeitsdruckes der Druckluft realisierbaren Größe des Prallraumes der Abdeckscheibe bestimmt. Hier ergeben sich bei einem Arbeitsdruck von etwa 6 bis 7 bar optimale Ergebnisse, sofern der Durchmesser des Prallraumes bei etwa 100 - 250 mm liegt. Ein Durchmesser von etwa 180 mm hat sich als besonders günstig herausgestellt. Die Tiefe des Prallraumes beträgt dabei etwa 10 - 125 mm. Optimale Verhältnisse ergeben sich in der Regel bei einer Tiefe von etwa 45 mm.

Wie es sich weiterhin gezeigt hat, ist es zur Erzielung optimaler Verhältnisse erforderlich, daß die Abdeckscheibe im Bereich ihres Prallraumes aus einem harten elastischen Material besteht. Dieses Material bewirkt dann einen sehr guten Rückprall-Effekt für das von der zu bearbeitenden Fläche abprallende Strahlmittel. Andererseits besteht der Abdeckrand der Abdeckscheibe aus einem weichen, elastisch verformbaren Material, insbesondere aus Gummi, das sich dichtend an die zu bearbeitende Oberfläche anschmiegen kann. Vorzugsweise ist die Abdeckscheibe derart ausgebildet, daß der Prallraum aus einem speziellen harten und elastischen Kunststoff gefertigt ist, wobei an den Randbereich der Abdeckscheibe der weiche Abdeckrand anvulkanisiert ist. Der Abdeckrand kann an seiner Unterseite einen rundlichen weichen, umlaufenden Gummiring zur zusätzlichen Abdichtung aufweisen.

Zum Strahlen kann grundsätzlich jedes übliche Sandstrahlmittel eingesetzt werden. Dieses gilt insbesondere dann, wenn die austretende Menge an Druckluft und der Anteil des Strahlmittels regulierbar sind. Die Wirkung des Strahlmittels kann dann sehr gut an die Erfordernisse angepaßt werden. Wie es sich gezeigt hat, lassen sich jedoch optimale Ergebnisse dann erzielen, wenn als Strahlmittel eine Hüttenschlacke mit scharfkantiger Kornform verwendet wird. Derartige Strahlmittel sind im Handel erhältlich und zeichnen sich auch dadurch aus, daß einerseits die scharfkantige Kornform eine gute Zerstörung der Pflanzenstruktur bewirkt, daß aber andererseits beim Auftreffen auf Naturstein- oder Betonflächen die Körner des Strahlmittels teilweise zerplatzen, so daß an der Oberfläche dieser Flächen kein unerwünschter Materialabtrag erfolgt. Diese Oberflächen werden dann sehr schonend gesäubert. Die vorzugsweise eingesetzte Korngröße liegt im Bereich von 0,50 - 1,50 mm. Die vorzugsweise eingesetzte Hüttenschlacke weist zudem den Vorteil auf, daß sie eine helle, sandähnliche Farbe aufweist. Außerdem ist die Hüttenschlacke silikatfrei, so daß eine Silikosegefährdung nicht gegeben ist.

In der Zeichnung ist ein Ausführungsbeispiel der Erfindung dargestellt und wird im folgenden näher beschrieben. Es zeigen:
Figur 1, eine schematische Darstellung einer erfindungsgemäßen Vorrichtung,
Figur 2, eine vergrößerte Darstellung des Strahlrohres in der Seitenansicht, mit der im Schnitt dargestellten Abdeckscheibe,
Figur 3, das Strahlrohr gemäß Figur 2, in der Ansicht von oben,
Figur 4, eine Abdeckscheibe im Querschnitt,
Figur 5, eine andere Ausführungsform der im Querschnitt dargestellten Abdeckscheibe mit der Strahldüse.

In der Zeichnung ist mit 1 eine Vorrichtung zur Beseitigung unerwünschten Pflanzenwuchses 10 durch Zerkleinerung mittels Druckluft und eines Strahlmittels bezeichnet. Die Vorrichtung 1 weist ein Strahlrohr 2 mit einer Strahldüse 3 auf, in deren Bereich eine Abdeckscheibe 4 angeordnet ist. Die Abdeckscheibe 4 weist einen in Strahlrichtung offenen napfförmigen Prallraum 5 auf, in den die Strahldüse 3 einmündet. Der Prallraum 5 ist von einem vorspringenden Abdeckrand 6 umgeben, der beim Betrieb der Vorrichtung 1 auf einem zu strahlenden Untergrund 7 aufliegt. Der Abdeckrand (6) besteht aus Gummi und weist zusätzlich an seiner Unterseite einen rundlichen weichen, umlaufenden auswechselbaren Gummiring (6a) auf.

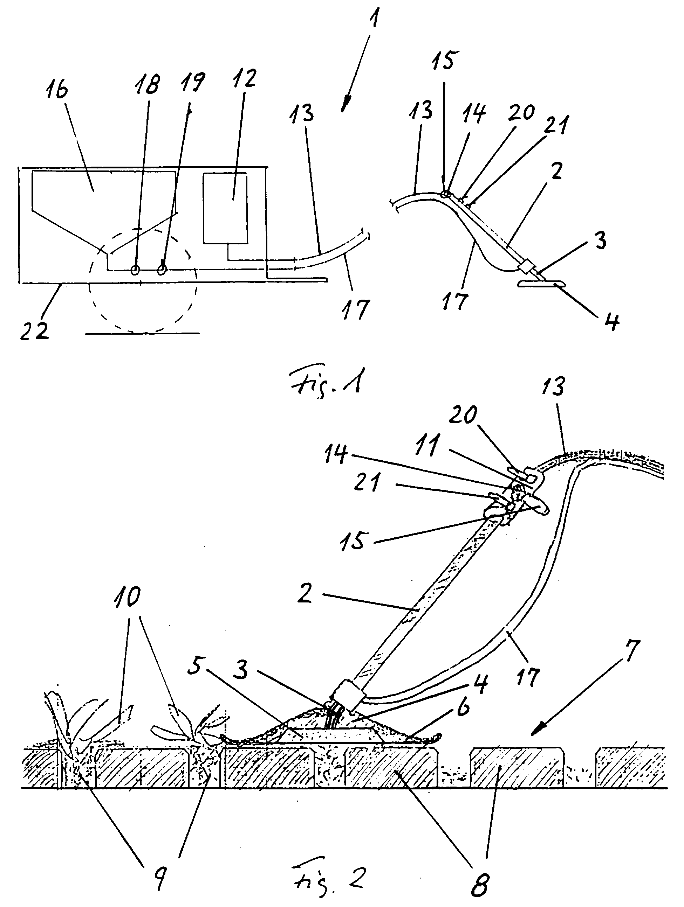

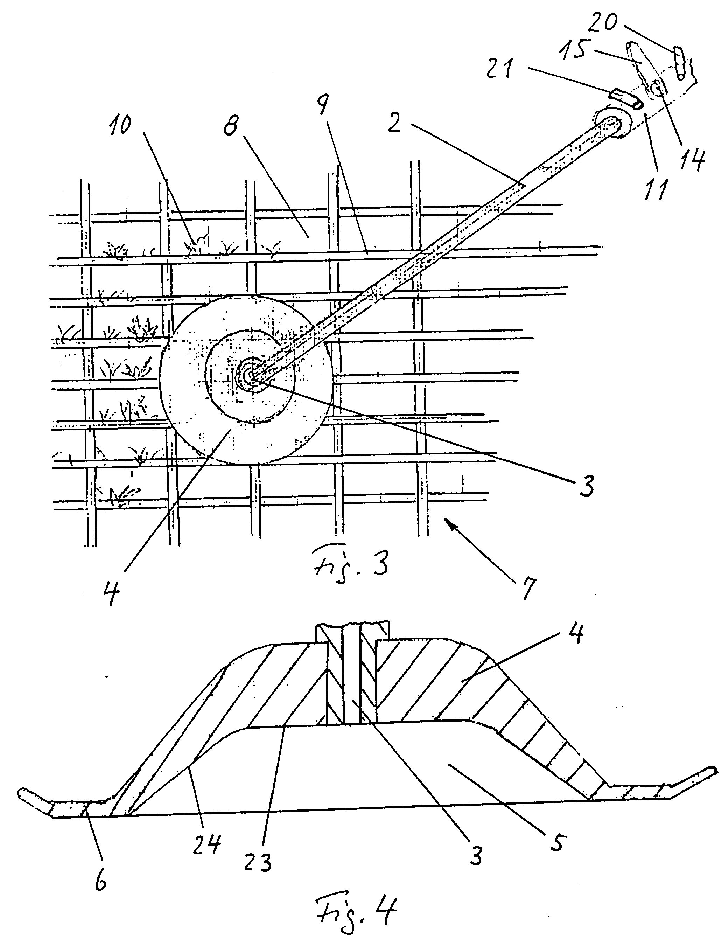

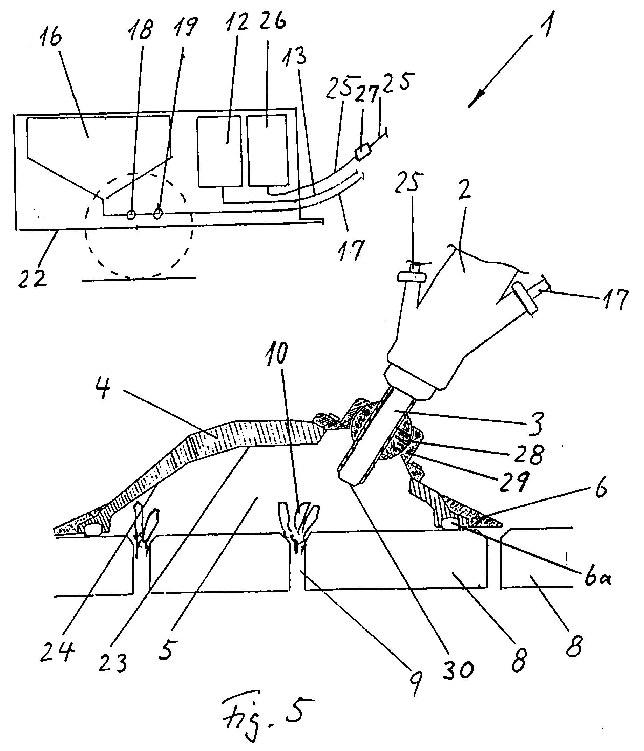

Aus den Figuren 2 und 3 der Zeichnung ist ersichtlich, daß der Untergrund 7 aus Steinplatten bzw. Steinen 8 besteht, zwischen denen beim Verlegen unvermeidbare Fugen 9 vorhanden sind. Aus den genannten Figuren ist gleichfalls ersichtlich, daß in den Fugen 9 zu entfernender Pflanzenwuchs 10 vorhanden ist.

Das Strahlrohr 2 weist ein Anschlußstück 11 auf, an dem eine an einen Drucklufterzeuger 12 geführte Druckluftleitung 13 angeschlossen ist. Der Querschnitt der Druckluftleitung 13 ist mittels eines im Anschlußstück 11 des Strahlrohres 2 angeordneten Ventils 14, an dem eine Handhabe 15 angeordnet ist, einstellbar. Durch eine Betätigung der Handhabe 15 kann die an der Strahldüse 3 des Strahlrohres 2 austretende Druckluftmenge einreguliert werden.

An die Strahldüse 3 des Strahlrohres 2 ist eine an einem Behälter 16 für das Strahlmittel geführte Strahlmittel-Leitung 17 geführt. In der Strahlmittel-Leitung 17 sind ein Absperrschieber 18 und ein Belüftungsventil 19 angeordnet. Der Absperrschieber 18 und das Belüftungsventil 19 sind über an dem Strahlrohr 2 angeordnete Handhaben 20 und 21 betätigbar. Die Betätigung erfolgt hier vorzugsweise über in der Zeichnung nicht dargestellte Betätigungsmittel.

Der Drucklufterzeuger 12 und der Behälter 16 für das Strahlmittel sind auf einem fahrbaren Untersatz 22 angeordnet.

Die aus der Strahldüse 3 des Strahlrohres 2 austretende, mit Strahlmittel angereicherte Druckluft bewirkt, daß in den Fugen 9 zwischen Steinplatten bzw. Steinen 8 der Pflanzenwuchs 10, wie in Figur 2 dargestellt, zerschlagen wird. Es erfolgt eine schnelle und effektive Zerstörung der Pflanzen bis weit in deren Wurzelbereich hinein. Insbesondere wird in der Regel auch der Vegetationspunkt der Pflanzen zerstört, so daß wenig später auch etwa verbleibende Wurzelreste absterben. Kleinere und flachwurzelnde Unkräuter werden durch den Luft-Sandstrom gänzlich mit den Wurzeln entfernt. Es ist somit sichergestellt, daß über einen längeren Zeitraum kein neuer Pflanzenbewuchs 10 erfolgt.

Insbesondere das auf die Oberfläche der Steinplatten bzw. Steine 8 auftreffende Strahlmittel wird in den muldenförmigen Prallraum 5 der Abdeckscheibe 4 zurückgeschleudert. Von dem parallel zum Untergrund verlaufenden Abschnitt 23 sowie von dem kegelmantelförmig ausgebildeten Abschnitt 24 des Prallraumes 5 wird dann das Strahlmittel mehrfach, d. h. so lange auf den Untergrund 7 zurückgeschleudert, bis es dort auf eine Fuge 9 bzw. Pflanze trifft und seine Wirkung auf den Pflanzenwuchs 10 entfalten kann. Aufgrund der harten elastischen Ausbildung der Abdeckscheibe in den Abschnitten 23 und 24 erfolgt ein sehr effektives Zurückschleudern des Strahlmittels. Die kinetische Energie, insbesondere des Strahlmittels, wird letztlich erst bei dessen Auftreffen auf die Fugen 9 bzw. auf den Pflanzenwuchs 10 vernichtet.

Da erfindungsgemäß vorzugsweise ein Strahlmittel verwendet wird, das aus einer Hüttenschlacke mit scharfkantiger Kornform besteht, erfolgt eine schnelle und effektive tiefgreifende Zerkleinerung des Pflanzenwuchses 10. Das Strahlmittel kann außerdem so ausgewählt werden, daß die Teilchen die Tendenz zeigen, beim Aufprall auf Naturstein- oder Betonflächen zu zerplatzen. Insbesondere bei einer derartigen Auswahl des Strahlmittels ist eine äußerst schonende Säuberung der Oberflächen von befestigten Wegen und Plätzen sichergestellt.

Die Anordnung einer Abdeckscheibe 4, deren Abdeckrand 6 sich elastisch an den Untergrund 7 anlegt, bewirkt eine Konzentration der Druckluft und des Strahlmittels auf die zu bearbeitenden Fugen 9. Der Abdeckrand 6 schließt den zu bearbeitenden Bereich des Untergrundes 7 seitlich ab und stellt sicher, daß Druckluft, Strahlmittel und Pflanzenreste lediglich über die Fugen 9 seitlich austreten können. Da vorher im weichen Untergrund der Fuge 9 ein weitgehender Energieabbau erfolgt ist, verteilt sich das abströmende Strahlmittel mit den mitgeführten Pflanzenresten lediglich über ein überraschend kleines Umfeld, ohne daß dort insbesondere durch das Strahlmittel irgendwelche negativen Auswirkungen eintreten. Insbesondere erfolgt keine Beschädigung dort befindlicher empfindlicher Gegenstände, wie z. B. parkender Kraftfahrzeuge. Begünstigt wird dieser Effekt dadurch, daß im Bereich des Pflanzenwuchses 10 in horizontaler Richtung aus den Fugen 9 kaum Strahlmittel austritt, weil es sich im Pflanzenwuchs 10 und in der dort befindlichen Erde bzw. Sand verfängt.

Durch die Anordnung des Ventils 14 in der Druckluftleitung 13 ist es dem Bediener möglich, den Druckluftstrom entsprechend der Anforderungen bei der Reinigung der Fugen 9 zu regulieren. Bei einem weichen Fugengrund, wie z. B. losem Sand, wird man mit weniger Druckluft arbeiten als bei einem festen Fugengrund. Eine Handhabe 15 an dem am Strahlrohr 2 angeordneten Ventil 14 ermöglicht dessen leichte Bedienung.

Zusätzlich hat es sich als vorteilhaft herausgestellt, wenn auch das Strahlmittel dosiert zugeführt werden kann. Hierzu ist in der Strahlmittel-Leitung 17 ein Belüftungsventil 19 angeordnet. Aufgrund des hier zum Einsatz kommenden Injektionsverfahrens wird mit zunehmender Belüftung der Strahlmittel-Leitung 17 in der Strahldüse 3, in der das Strahlmittel der Druckluft zugeführt wird, von der Druckluft zunehmend die in der Strahlmittel-Leitung 17 befindliche Luft und weniger Strahlmittel mitgerissen. Der Anteil an Strahlmittel in der Druckluft ist also über das Belüftungsventil 19 regulierbar. Die Regulierung erfolgt vorzugsweise über eine am Strahlrohr 2 angeordnete Handhabe 21 mittels in der Zeichnung nicht dargestellter Mittel.

Zur völligen Absperrung der Strahlmittel-Zufuhr ist es beim Injektionsverfahren erforderlich, den gleichfalls in der Strahlmittel-Leitung 17 angeordneten Absperrschieber 18 zu betätigen. Wird der Absperrschieber 18 geschlossen, so kann an der Strahldüse 3 des Strahlrohres 2 kein Strahlmittel austreten. Auch der Absperrschieber 18 kann über eine am Strahlrohr 2 angeordnete Handhabe 20 betätigt werden. Es hat sich im übrigen gezeigt, daß es zum Teil ausreichend ist, mit reiner Druckluft zu arbeiten. Wie sich gezeigt hat, ist das aus den Fugen 9 herausgerissene Material häufig bereits dazu in der Lage, als Strahlmittel zu wirken und den Pflanzenwuchs 10 zu zerstören.

In der Figur 5 der Zeichnung ist eine andere Ausführungsform der Abdeckscheibe 4 mit ihrer Strahldüse 3 dargestellt. In die Strahldüse 3 mündet hier zusätzlich eine Zuleitung 25 für ein Benetzungsmittel ein, die in der Strahldüse 3 der Druckluft und dem Strahlmittel durch Injektion beigemischt wird. Der Luftstrom in der Strahldüse 3 saugt die Benetzungsflüssigkeit, ohne daß in der Zuleitung 25 eine Druckbeaufschlagung erforderlich ist, in die Strahldüse 3 ein. Die Benetzungsflüssigkeit bewirkt, daß die unmittelbare Einwirkung des Strahlmittels auf die Oberfläche der Steinplatten 8, d. h. auf den zu bestrahlenden Untergrund 7, derart abgepuffert wird, daß die Oberfläche nicht angegriffen, d. h. nicht in der Form aufgerauht wird, daß Aufhellungen entstehen. Andererseits bleibt der angestrebte Effekt der intensiven Einwirkung auf den Pflanzenwuchs 10 voll erhalten, was daraus zu erklären ist, daß die Oberfläche des Pflanzenwuchses 10 insgesamt sehr viel weicher ist, als die Oberfläche der Steinplatten 8. Außerdem kann sich auf den weichen und nachgiebigen, flächenmäßig begrenzten Pflanzenteilen kein dämpfender Wasserfilm ausbilden. Die Ausbildung eines Wasserfilms wird zusätzlich dadurch verhindert, daß der Pflanzenwuchs 10 durch den Druckluft-Strahlmittelstrom in intensive Schwingungen versetzt wird. Vorzugsweise handelt es sich bei der Benetzungsflüssigkeit um Wasser. Gegebenenfalls kann der Benetzungsflüssigkeit jedoch auch ein herbizides Mittel zugesetzt werden, so daß sich dann neben der an sich bereits sehr intensiven mechanischen Einwirkung auf den Pflanzenwuchs 10 eine zusätzliche chemische Einwirkung ergibt. Die Zuleitung 25 für die Benetzungsflüssigkeit ist an einen Benetzungsflüssigkeitsbehälter 26 geführt, der zusammen mit dem Behälter 16 für das Strahlmittel und dem Drucklufterzeuger 12 auf einem fahrbaren Untersatz 22 angeordnet ist. In der Zuleitung 25 ist ein Ventil 27 angeordnet, mittels dem die Zuleitung 25, d. h. die Zufuhr von Benetzungsflüssigkeit, absperrbar ist. Es ist somit durchaus möglich, mittels der erfindungsgemäßen Vorrichtung 1 auch ohne die Zufuhr von Benetzungsflüssigkeit zu arbeiten.

Die Strahldüse 3 ist in dem in der Figur 5 dargestellten Ausführungsbeispiel in einer kugelförmigen Aufnahme 28 angeordnet, die wiederum in einem schalenförmigen Führungskörper 29 der Abdeckscheibe 4 verschwenkbar geführt ist. Diese Ausbildung ermöglicht ein Verschwenken der Strahldüse 3 in der Abdeckscheibe 4 über einen großen Schwenkwinkel. Dieses ist insofern von Bedeutung, als es sich, wie bereits ausgeführt, als vorteilhaft erwiesen hat, den Auftreffwinkel des Strahls auf den Untergrund 7 zu verändern. Die Intensität der Einwirkung auf den Untergrund 7, d. h. auf den Pflanzenwuchs 10, kann so optimiert, d. h. an die jeweiligen Erfordernisse angepaßt werden. Es hat sich im übrigen als vorteilhaft herausgestellt, wenn die Austrittsöffnung 30 der Strahldüse 3 einen Abstand von 25 bis 125 mm, vorzugsweise von 45 mm, zum Untergrund 7 aufweist. In diesem Bereich ergibt sich ein besonders hoher Wirkungsgrad, d. h. es ergibt sich eine besonders gute Ausnutzung der Mengen an Strahlmittel und Benetzungsflüssigkeit, sowie der zur Verfügung stehenden Energie.

Durch die Anordnung der Abdeckscheibe 4 an der Strahldüse 3 des Strahlrohres 2 wird im übrigen grundsätzlich erreicht, daß die Druckluft und das Strahlmittel sehr viel intensiver zur Beseitigung des Pflanzenwuchses 10 genutzt werden, als beispielsweise bei einer Bearbeitung des Untergrundes 7 mit einer herkömmlichen Strahldüse 3 ohne Abdeckscheibe 4. Es wird für die Bearbeitung sehr viel weniger Druckluft benötigt, außerdem reduziert sich auch der Verbrauch an Strahlmittel auf etwa 30 % der bei dem herkömmlichen Sandstrahlverfahren erforderlichen Menge. Es wird im übrigen vorzugsweise mit einem Druck von 6 - 7 bar gearbeitet.

## Patentansprüche

1. Vorrichtung (1) zur Beseitigung unerwünschten Pflanzenwuchses (10) auf befestigten Flächen mittels Druckluft und eines Strahlmittels, wobei in der Vorrichtung ein an einen Drucklufterzeuger (12) und an einen Behälter (16) für das Strahlmittel angeschlossenes Strahlrohr (2) vorgesehen ist, an dessen Strahldüse (3) eine Abdeckhaube (4) angeordnet ist, die in Strahlrichtung offen ist und daß die Abdeckhaube (4) von einem vorspringenden Abdeckrand (6) umgeben ist, der beim Betrieb der Vorrichtung (1) auf dem zu strahlenden Untergrund (7) aufliegt, dadurch gekennzeichnet, daß die Abdeckhaube als Abdeckscheibe (4) ausgebildet ist und einen Prallraum (5) aufweist, in dessen Bereich die Abdeckscheibe (4) aus einem harten elastischen Material besteht, wobei die Tiefe des Prallraumes (5) 10 bis 50 % des Durchmessers des Prallraumes (5) beträgt, daß die Abdeckscheibe (4) verschwenkbar am Strahlrohr (2) angeordnet ist und daß der Abdeckrand (6) aus einem weichen elastischen, verformbaren Material besteht, derart, daß mittels der Vorrichtung (1) Pflanzenwuchs (10) aus Fugen (9) des Untergrundes (7) entfernt werden kann.

2. Vorrichtung (1) nach Anspruch 1, dadurch gekennzeichnet, daß vor oder während dem Strahlen eine Benetzungsflüssigkeit aufgebracht wird.

3. Vorrichtung (1) nach den Ansprüchen 1 und 2, dadurch gekennzeichnet, daß die Benetzungsflüssigkeit über eine Zuleitung (25) der Strahldüse (3) des Strahlrohrs (2) zugeführt wird.

4. Vorrichtung (1) nach wenigstens einem der vorhergehenden Ansprüche, dadurch gekennzeichnet, daß es sich bei der Benetzungsflüssigkeit um Wasser handelt.

5. Vorrichtung (1) nach wenigstens einem der vorhergehenden Ansprüche, dadurch gekennzeichnet, daß der Benetzungsflüssigkeit ein herbizides Mittel zugesetzt ist.

6. Vorrichtung (1) nach mindestens einem der vorhergehenden Ansprüche, dadurch gekennzeichnet, daß zwischen dem Behälter (16) für das Strahlmittel und der Strahldüse (3) des Strahlrohres (2) ein einstellbares Belüftungsventil (19) vorgesehen ist, über das eine Strahlmittel-Leitung (17) belüftbar ist, derart, daß die Menge des an der Strahldüse (3) des Strahlrohres (2) austretenden Strahlmittels veränderbar ist.

7. Vorrichtung (1) nach mindestens einem der vorhergehenden Ansprüche, dadurch gekennzeichnet, daß das Strahlrohr (2) tragbar ist und daß am Strahlrohr (2) eine Handhabe (21) zur Verstellung des zwischen dem Behälter (16) für das Strahlmittel und der Strahldüse (3) angeordneten Belüftungsventils (19) vorgesehen ist.

8. Vorrichtung (1) nach mindestens einem der vorhergehenden Ansprüche, dadurch gekennzeichnet, daß am Strahlrohr (2) ein Ventil (14) mit einer Handhabe (15) zur Einstellung der an der Strahldüse (3) austretenden Druckluftmenge angeordnet ist.

9. Vorrichtung (1) nach wenigstens einem der vorhergehenden Ansprüche, dadurch gekennzeichnet, daß zwischen dem Behälter (16) für das Strahlmittel und der Strahldüse (3) des Strahlrohres (2) ein Absperrschieber (18) zum Verschließen der Strahlmittel-Leitung (17) vorgesehen ist.

10. Vorrichtung (1) nach wenigstens einem der vorhergehenden Ansprüche, dadurch gekennzeichnet, daß eine Handhabe (20) zur Betätigung des Absperrschiebers (18) am Strahlrohr (2) angeordnet ist.

11. Vorrichtung (1) nach wenigstens einem der vorhergehenden Ansprüche, dadurch gekennzeichnet, daß die Zuleitung (25) für die Benetzungsflüssigkeit zwischen dem Strahlrohr (2) und einem Benetzungsflüssigkeitsbehälter (26) mittels eines Ventils (27) absperrbar ist.

12. Vorrichtung (1) nach wenigstens einem der vorhergehenden Ansprüche, dadurch gekennzeichnet, daß der Drucklufterzeuger (12), der Behälter (16) für das Strahlmittel und der Behälter (26) für die Benetzungsflüssigkeit auf einem fahrbaren Untersatz (22) angeordnet sind.

13. Vorrichtung (1) nach wenigstens einem der vorhergehenden Ansprüche, dadurch gekennzeichnet, daß die Strahldüse (3) des Strahlrohres (2) mittig in den Prallraum (5) der Abdeckscheibe (4) einmündet.

14. Vorrichtung (1) nach wenigstens einem der vorhergehenden Ansprüche, dadurch gekennzeichnet, daß die Austrittsöffnung (30) der Strahldüse (3) des Strahlrohres (2) einen Abstand von 25 bis 125 mm, vorzugsweise von 45 mm, zum Untergrund (7) im Betrieb aufweist.

15. Vorrichtung (1) nach wenigstens einem der vorhergehenden Ansprüche, dadurch gekennzeichnet, daß die Bodenfläche des Prallraumes (5) der Abdeckscheibe (4) im Betrieb einen parallel zum Untergrund (7) verlaufenden Abschnitt (23) aufweist, an den sich ein etwa kegelmantelförmig ausgebildeter Abschnitt (24) als Übergang zum Abdeckrand (6) anschließt.

16. Vorrichtung (1) nach wenigstens einem der vorhergehenden Ansprüche, dadurch gekennzeichnet, daß die Abdeckscheibe (4) einen Außendurchmesser von etwa 100 bis 300 mm, insbesondere 260 mm, hat.

17. Vorrichtung (1) nach wenigstens einem der vorhergehenden Ansprüche, dadurch gekennzeichnet, daß der Prallraum (5) der Abdeckscheibe (4) einen Durchmesser von 100 bis 250 mm, insbesondere etwa 180 mm, und eine Tiefe von etwa 10 bis 125 mm, insbesondere 45 mm, hat.

18. Vorrichtung (1) nach wenigstens einem der vorhergehenden Ansprüche, dadurch gekennzeichnet, daß der Abdeckrand (6) aus Gummi besteht und zusätzlich an seiner Unterseite einen rundlichen weichen, umlaufenden auswechselbaren Gummiring (6a) aufweist.

19. Vorrichtung (1) nach wenigstens einem der vorhergehenden Ansprüche, dadurch gekennzeichnet, daß als Strahlmittel eine Hüttenschlacke mit scharfkantiger Kornform verwendet wird, die beim Auftreffen auf eine harte Fläche zum Zerplatzen neigt.

## Claims

1. A device (1) for the removal of unwanted plant growth (10) from paved areas by means of compressed air and an abrasive, wherein the device (1) is provided with a jet tube (2) which is connected to a compressed air generator (12) and a container (16) for the abrasive, with a cover hood (4) arranged on the jet nozzle (3) of the said jet tube (2), the said cover plate (4) being open in the direction of the jet stream and enveloped by a projecting cover edge (6) which lies on the ground (7) being treated during operation of the device (1), characterised in that the cover hood is in the form of a cover plate (4) and has a rebound area (5) in the region of which the cover plate (4) comprises a hard elastic material, with the depth of the rebound area (5) between 10% and 50% of the diameter of the rebound area (5), with the cover plate (4) arranged on the jet tube (2) so that it can pivot and the cover edge (6) made of a soft, elastic, pliable material, such that the device (1) can be used for the removal of plant growth (10) from joints (9) in the ground (7).

2. A device (1) according to claim 1, characterised in that a wetting fluid is applied before or during operation.

3. A device (1) according to claim 1 and claim 2, characterised in that the wetting fluid is fed to the jet nozzle (3) of the jet tube (2) via a feed line (25).

4. A device (1) according to at least one of the preceding claims, characterised in that the wetting fluid is water.

5. A device (1) according to at least one of the preceding claims, characterised in that a herbicidal agent is added to the wetting fluid.

6. A device (1) according to at least one of the preceding claims, characterised in that an adjustable air-inlet valve (19) is provided between the container (16) for the abrasive and the jet nozzle (3) of the jet tube (2), by means of which an abrasive line (17) can admit air such that the quantity of abrasive discharged from the jet nozzle (3) of the jet tube (2) can be altered.

7. A device (1) according to at least one of the preceding claims, characterised in that the jet tube (2) is portable and a lever (21) is provided on the jet tube (2) for adjustment of the air-inlet valve (19) arranged between the container (16) for the abrasive and the jet nozzle (3).

8. A device (1) according to at least one of the preceding claims, characterised in that a valve (14) with a lever (15) is arranged on the jet tube (2) for adjustment of the volume of compressed air discharged from the jet nozzle (3).

9. A device (1) according to at least one of the preceding claims, characterised in that a gate valve (18) is arranged between the container (16) for the abrasive and the jet nozzle (3) of the jet tube (2) to close off the abrasive line (17).

10. A device (1) according to at least one of the preceding claims, characterised in that a lever (20) for actuation of the gate valve (18) is arranged on the jet tube (2).

11. A device (1) according to at least one of the preceding claims, characterised in that the feed line (25) for the wetting fluid between the jet tube (2) and a wetting fluid container (26) can be closed off by means of a valve (27).

12. A device (1) according to at least one of the preceding claims, characterised in that the compressed air generator (12), the container (16) for the abrasive and the container (26) for the wetting fluid are arranged on a movable platform (22).

13. A device (1) according to at least one of the preceding claims, characterised in that the jet nozzle (3) of the jet tube (2) opens centrally into the rebound area (5) of the cover plate (4).

14. A device (1) according to at least one of the preceding claims, characterised in that the discharge opening (30) of the jet nozzle (3) of the jet tube (2) during operation is at a distance of between 25 and 125 mm, preferably 45 mm, from the ground (7).

15. A device (1) according to at least one of the preceding claims, characterised in that the floor region of the rebound area (5) of the cover plate (4) during operation has a section (23) extending parallel to the ground (7), which is adjoined by an approximately cone envelope-shaped section (24) as a transition to the cover edge (6).

16. A device (1) according to at least one of the preceding claims, characterised in that the cover plate has an external diameter of approximately 100 to 300 mm, especially 260 mm.

17. A device (1) according to at least one of the preceding claims, characterised in that the rebound area (5) of the cover plate (4) has a diameter of 100 to 250 mm, especially approximately 180 mm, and a depth of approximately 10 to 125 mm, especially 45 mm.

18. A device (1) according to at least one of the preceding claims, characterised in that the cover edge (6) is of rubber and is additionally provided on its underside with a rounded, soft, circumferential, exchangeable rubber ring (6a).

19. A device (1) according to at least one of the preceding claims, characterised in that steel slag with a sharp-edged grain shape is used as the abrasive, and upon impingement upon a hard surface tends to disintegrate.

## Revendications

1. Dispositif (1) pour éliminer de la végétation indésirable (10) sur des surfaces fixes au moyen d'air comprimé et d'un agent de grenaillage, dispositif dans lequel on prévoit un tube de grenaillage (2) raccordé à un compresseur d'air (12) et à un réservoir (16) pour l'agent de grenaillage, tube sur la buse de grenaillage (3) duquel on dispose un capot de recouvrement (4), qui est ouvert dans le sens du jet et le capot de recouvrement (4) étant entouré par un bord de recouvrement en saillie (6), qui lorsque le dispositif (1) est en fonctionnement, repose sur le sol (7) à grenailler, dispositif caractérisé en ce que le capot de recouvrement est constitué sous la forme d'un disque de recouvrement (4) et présente un espace de rebondissement (5), dans la zone duquel le disque de recouvrement (4) est réalisé en une matière élastique, dure, la profondeur de l'espace de rebondissement (5) atteignant 10 à 50 % du diamètre de l'espace de rebondissement (5), en ce que le disque de recouvrement (4) est disposé de façon à pouvoir pivoter sur le tube de grenaillage (2) et en ce que le bord de recouvrement (6) est réalisé en une matière molle, élastique, déformable, de telle façon que l'on puisse enlever au moyen du dispositif (1) la végétation (10) ayant poussé dans les joints (9) du sol (7).

2. Dispositif (1) selon la revendication 1, caractérisé en ce que l'on met un liquide de mouillage avant ou pendant le grenaillage.

3. Dispositif (1) selon les revendications 1 et 2, caractérisé en ce que le liquide de mouillage est amené par une conduite (25) à la buse (3) du tube de grenaillage (2).

4. Dispositif (1) selon au moins l'une des revendications précédentes, caractérisé en ce qu'il s'agit, dans le cas du liquide de mouillage, d'eau.

5. Dispositif (1) selon au moins l'une des revendications précédentes, caractérisé en ce qu'au liquide de mouillage on ajoute un agent herbicide.

6. Dispositif (1) selon au moins l'une des revendications précédentes, caractérisé en ce qu'entre le réservoir (16) pour l'agent de grenaillage et la buse (3) du tube de grenaillage (2) on prévoit une vanne réglable de ventilation (19), au moyen de laquelle on peut ventiler une conduite (17) pour l'agent de grenaillage, d'une manière telle que l'on puisse faire varier la quantité de l'agent de grenaillage qui sort de la buse (3) du tube de grenaillage (2).

7. Dispositif (1) selon au moins l'une des revendications précédentes, caractérisé en ce que le tube de grenaillage (2) est portable et en ce que l'on prévoit sur le tube de grenaillage (2) une poignée (21) servant à régler la vanne de ventilation (19) disposée entre le réservoir (16) pour l'agent de grenaillage et la buse de grenaillage (3).

8. Dispositif (1) selon au moins l'une des revendications précédentes, caractérisé en ce que l'on dispose sur le tube de grenaillage (2) une vanne (14) avec une poignée (15) pour régler la quantité d'air comprimé sortant de la buse de grenaillage (3).

9. Dispositif (1) selon au moins l'une des revendications précédentes, caractérisé en ce qu'entre le réservoir (16) pour l'agent de grenaillage et la buse (3) du tube de grenaillage (2) on prévoit un poussoir d'obturation (18) qui sert à fermer la conduite (17) pour l'agent de grenaillage.

10. Dispositif (1) selon au moins l'une des revendications précédentes, caractérisé en ce que l'on dispose une poignée (20) pour actionner le poussoir d'obturation (18) sur le tube de grenaillage (2).

11. Dispositif (1) selon au moins l'une des revendications précédentes, caractérisé en ce que la conduite (25) pour le liquide de mouillage entre le tube de grenaillage (2) et un réservoir (26) de liquide de mouillage peut être obturée au moyen d'une vanne (27).

12. Dispositif (1) selon au moins l'une des revendications précédentes, caractérisé en ce que le compresseur d'air (12), le réservoir (16) pour l'agent de grenaillage et le réservoir (26) pour le liquide de mouillage sont disposés sur un socle mobile (22).

13. Dispositif (1) selon au moins l'une des revendications précédentes, caractérisé en ce que la buse (3) du tube de grenaillage (2) débouche au milieu dans l'espace de rebondissement (5) du disque de recouvrement (4).

14. Dispositif (1) selon au moins l'une des revendications précédentes, caractérisé en ce que l'orifice de sortie (30) de la buse (3) du tube de grenaillage (2) présente en fonctionnement une distance de 25 à 125 mm, de préférence de 45 mm, par rapport au sol (7).

15. Dispositif (1) selon au moins l'une des revendications précédentes, caractérisé en ce que le fond de l'espace de rebondissement (5) du disque de recouvrement (4) présente en fonctionnement une section (23) qui s'étend parallèlement au sol (7), à laquelle se raccorde une section (24) constituée à peu près en forme de cône, comme transition vers le bord de recouvrement (6).

16. Dispositif (1) selon au moins l'une des revendications précédentes, caractérisé en ce que le disque de recouvrement (4) a un diamètre externe d'environ 100 à 300 mm, en particulier de 260 mm.

17. Dispositif (1) selon au moins l'une des revendications précédentes, caractérisé en ce que l'espace de rebondissement (5) du disque de recouvrement (4) a un diamètre de 100 à 250 mm, en particulier d'environ 180 mm, et une profondeur d'environ 10 à 125 mm, en particulier de 45 mm.

18. Dispositif (1) selon au moins l'une des revendications précédentes, caractérisé en ce que le bord de recouvrement (6) est en caoutchouc et présente en outre sur sa face inférieure une bague en caoutchouc (6a) ronde, molle, faisant tout le tour, qui est interchangeable.

19. Dispositif (1) selon au moins l'une des revendications précédentes, caractérisé en ce que l'on utilise comme agent de grenaillage des scories sidérurgiques avec une structure granuleuse à arêtes vives, qui ont tendance à se briser en arrivant sur une surface dure.
